(19) **Europäisches Patentamt / European Patent Office / Office européen des brevets**

(11) **EP 4 733 736 A1**

(12) **EUROPEAN PATENT APPLICATION**
published in accordance with Art. 153(4) EPC

(43) Date of publication:
**29.04.2026 Bulletin 2026/18**

(21) Application number: **23942479.9**

(22) Date of filing: **07.11.2023**

(51) International Patent Classification (IPC):
***G01N 1/02*** *(2006.01)*

(52) Cooperative Patent Classification (CPC):
**G01N 1/02**

(86) International application number:
**PCT/JP2023/039978**

(87) International publication number:
**WO 2024/262051 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.06.2023 JP 2023103489**

(71) Applicant: **Railway Technical Research Institute
Kokubunji-shi, Tokyo 185-8540 (JP)**

(72) Inventors:
• **OZAKI, Ryo**
  **Kokubunji-shi, Tokyo 185-8540 (JP)**
• **SAGA, Shinichi**
  **Kokubunji-shi, Tokyo 185-8540 (JP)**
• **HANDA, Kazuyuki**
  **Kokubunji-shi, Tokyo 185-8540 (JP)**
• **IKEUCHI, Katsuyoshi**
  **Kokubunji-shi, Tokyo 185-8540 (JP)**

(74) Representative: **Hoffmann Eitle
Patent- und Rechtsanwälte PartmbB
Arabellastraße 30
81925 München (DE)**

(54) **COLLECTION DEVICE, MEASUREMENT SYSTEM, COLLECTION METHOD, AND MEASUREMENT METHOD FOR PARTICULATE MATERIAL**

(57)     A collection apparatus (4) collects particulate material (M) generated by frictional contact. The collection apparatus (4) includes: a suction duct section (6) that sucks air containing the particulate material (M); a rectifier section (7) that rectifies a flow (F) of air inside the suction duct section (6) to a laminar flow state; an exhaust section (9) that discharges the air sucked into the suction duct section (6) to outside the suction duct section (6); and a collection section (8) that collects, within the suction duct section (6), air flowing inside the suction duct section (6) in the laminar flow state.

FIG.1

EP 4 733 736 A1

## Description

TECHNICAL FIELD

The present invention relates to a collection apparatus, etc. for particulate material that collects particulate material generated by frictional contact.

BACKGROUND OF THE INVENTION

For conventional measurement of wearing depth of a brake (hereinafter, referred to as Conventional Art 1), there is a commonly used method in which an enclosure for collecting dust is installed around the entire brake unit upon collecting particles generated from the brake, sampling air is sent by using an HEPA filter or the like, and air containing the particles gets sucked by a duct (constant-volume sampling system) or the like (for example, see Non-Patent Literature 1). Furthermore, in conventional measurement of wearing depth of a brake (hereinafter, referred to as Conventional Art 2), there is also a method in which only a brake unit is covered to suck air containing particles into a duct (for example, see Non-Patent Literature 2).

A conventional apparatus for measuring brake dust (hereinafter, referred to as Conventional Art 3) includes: a housing surrounding brake equipment; a supply duct that supplies air to the housing; an exhaust air duct that discharges the air supplied into the housing through a straight pipe and a curved pipe; and a particle measuring apparatus that picks up brake dust particles and the like generated when a brake is actuated in the exhaust air duct (for example, see Patent Literature 1). This conventional apparatus for measuring brake dust supplies air to the air supply duct by a fan system, and also purifies the supplied air by inlet filters.

RELATED ART DOCUMENT

PATENT LITERATURE

Non-Patent Literature 1: Hiroyuki Hagino, Motoaki Oyama, Sousuke Sasaki, "Laboratory testing of airborne brake wear particle emissions using a dynamometer system under urban city driving cycles", Atmospheric Environment, 2016, 131, pp. 269-278
Non-Patent Literature 2: Marcel Mathissen, Theodoros Grigoratos, Tero Lahde, Rainer Vogt, "Brake Wear Particle Emissions of a Passenger Car Measured on a Chassis Dynamometer", Atmosphere, 2019, 10, 556
Patent Literature 1: Japanese Translation of PCT International Application Publication No. JP-T-2020-520448

SUMMARY OF THE INVENTION

TECHNICAL PROBLEM

In Conventional Arts 1 to 3, full suction is necessary for quantitative measurement of a quantity of particles discharged from brake equipment, and therefore an apparatus covering the entire generation source is used. However, such an apparatus is large in scale, and thus requires high costs for installation and operation. Additionally, in Conventional Arts 1 to 3, in a case of a duct with a bend, a flow velocity distribution inside the duct may become unstable. Furthermore, while particles discharged from brake equipment of an automobile are measured in Conventional Arts 1 to 3, strong rotating wind is generated by high-speed rotation of a wheel of a railway vehicle in a case of measuring particles generated by frictional contact between the wheel of the railway vehicle and a brake shoe of the brake equipment, so that particles are scattered around, making the measurement difficult.

In a dust collector commonly used in a bench brake tester, a large duct diameter is necessary for ensuring a sufficient flow rate of suction into a duct from a generation source of particles. As a result, a flow inside the duct cannot be stabilized, and a flow velocity inside the duct does not match with a flow velocity inside a collection tube of a dust collector-indicator, making isokinetic suction difficult.

The present invention has an object to provide a technique that enables a collection section to stably collect air containing particulate material flowing inside a suction duct section.

SOLUTION TO PROBLEM

A first aspect of the invention is a collection apparatus for particulate material that collects particulate material generated by frictional contact, comprising:

a suction duct section that sucks air containing the particulate material;
a rectifier section that rectifies a flow of air inside the suction duct section to a laminar flow state;
an exhaust section that discharges the air sucked into the suction duct section to outside the suction duct section; and
a collection section that collects, within the suction duct section, air flowing inside the suction duct section.

A second aspect of the invention is the collection apparatus according to the first aspect, further comprising a dust collecting section that drops and collects heavy particulate material among the particulate material, wherein the dust collecting section discharges air containing light particulate material among the particulate material to the suction duct section.

A third aspect of the invention is the collection apparatus according to the first or second aspect, wherein the suction duct section sucks the air containing the particulate material in a direction of wind generated by movement of a member being in frictional contact.

A fourth aspect of the invention is the collection apparatus according to any one of the first to third aspects, wherein the suction duct section sucks the air containing the particulate material from below upward.

A fifth aspect of the invention is the collection apparatus according to any one of the first to third aspects, wherein the suction duct section sucks the air containing the particulate material in a horizontal direction.

A sixth aspect of the invention is the collection apparatus according to any one of the first to fifth aspects, wherein, provided that L represents a full length of a straight pipe section of the suction duct section and D represents an inner diameter of the suction duct section,

a distance from an inflow port of the suction duct section to a collection port of the collection section is 0.4L to 0.8L,
an inner diameter of a rectifying lattice of the rectifier section is 0.02D to 0.10D, and
a length of the rectifying lattice is 0.5D to 1.0D.

A seventh aspect of the invention is a measurement system comprising the collection apparatus according to any one of the first to sixth aspects, for measuring the particulate material collected by the collection apparatus.

An eighth aspect of the invention is a collection method for particulate material generated by frictional contact, comprising:

rectifying a flow of air inside a suction duct section such that the flow of air inside the suction duct section becomes a laminar flow state, the suction duct section sucking air containing the particulate material;
discharging the air sucked into the suction duct section to outside the suction duct section; and
collecting, within the suction duct section, the flow of the air flowing inside the suction duct section.

A ninth aspect of the invention is a measurement method comprising the collection method according to the eighth aspect, for measuring the particulate material collected by the collection method.

ADVANTAGEOUS EFFECTS OF INVENTION

According to the present invention, it is possible to stably collect air containing particulate material flowing inside the suction duct section by the collection section.

BRIEF DESCRIPTION OF THE DRAWINGS

FIG. 1 is a view schematically showing an overall configuration of a measurement system according to a first embodiment, in which a collection apparatus is schematically illustrated in a longitudinal cross-sectional view.
FIG. 2 is a cross-sectional view taken along the line II-II in FIG. 1.
FIG. 3 is a cross-sectional view taken along the line III-III in FIG. 1.
FIG. 4A is a horizontal cross-sectional view schematically showing a circular rectifying lattice as a rectifying lattice of a rectifier section in a collection apparatus for particulate material according to the first embodiment.
FIG. 4B is a horizontal cross-sectional view schematically showing a honeycomb core rectifying lattice as the rectifying lattice of the rectifier section in the collection apparatus for particulate material according to the first embodiment.
FIG. 4C is a horizontal cross-sectional view schematically showing a quadrilateral rectifying lattice as the rectifying lattice of the rectifier section in the collection apparatus for particulate material according to the first embodiment.

FIG. 5 is an enlarged cross-sectional view of the part V in FIG. 1.

FIG. 6 is a schematic diagram illustrating dimensions of respective sections of the collection apparatus for particulate material according to the first embodiment.

FIG. 7A is a schematic view of the collection apparatus for particulate material according to the first embodiment for describing operations and effects of that collection apparatus.

FIG. 7B is a schematic view of a collection apparatus as a comparative example for describing the operations and effects of the collection apparatus for particulate material according to the first embodiment.

FIG. 8 is a longitudinal cross-sectional view schematically showing a collection apparatus for particulate material according to a second embodiment.

FIG. 9A is a graph showing measurement results of particulate material collected by a collection apparatus for particulate material according to an example, as measured by a particle measuring apparatus with an initial speed of a wheel of 65 [km/h].

FIG. 9B is a graph showing measurements results of particulate material collected by the collection apparatus for particulate material according to the example, as measured by the particle measuring apparatus with the initial speed of the wheel of 95 [km/h].

FIG. 10 is a schematic view of a modification example of a collection apparatus.

FIG. 11 is a schematic view of a modification example of a collection apparatus.

DETAILED DESCRIPTION

(First Embodiment)

Hereinafter, a first embodiment will be described in detail with reference to the drawings.

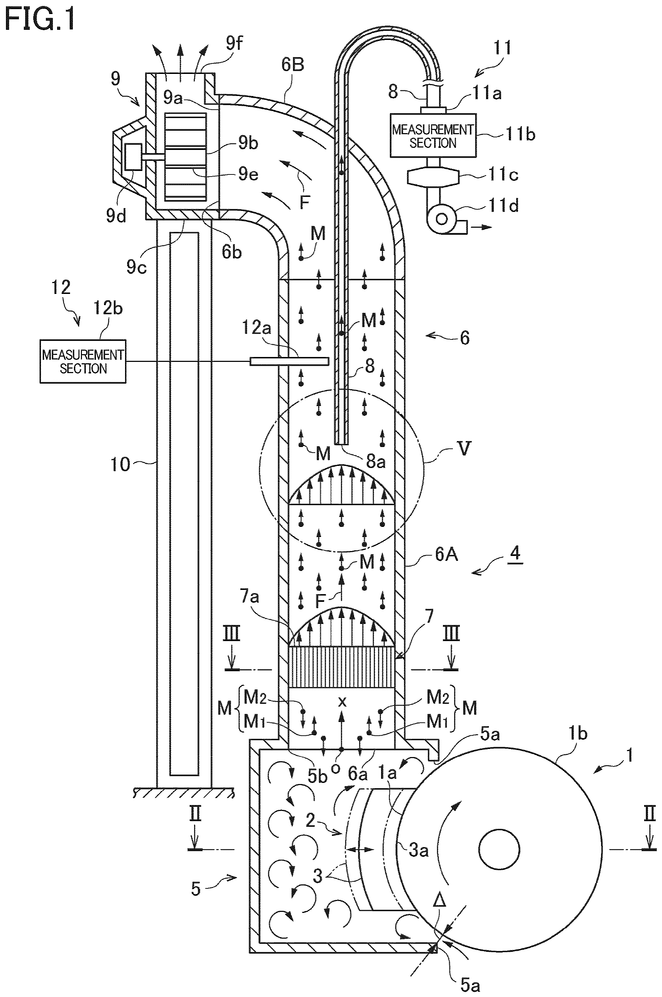

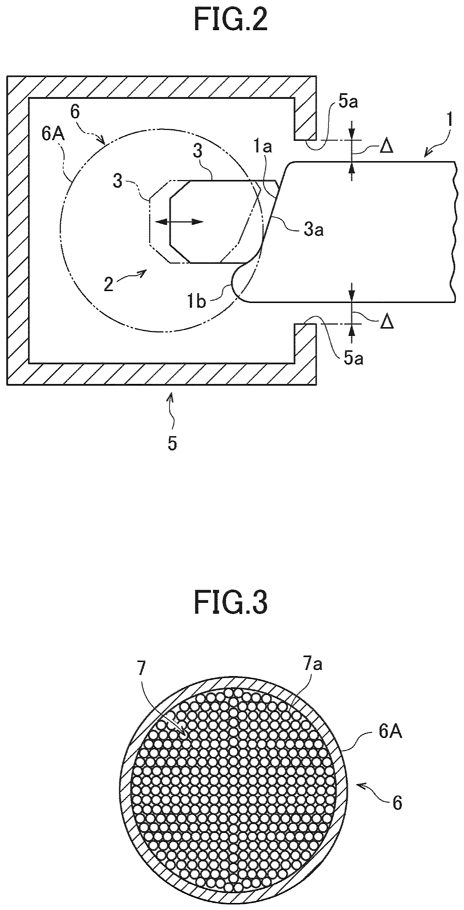

FIG. 1 is a view schematically showing an overall configuration of a measurement system that measures particulate material during braking application associated with a wheel 1 and brake equipment 2 as measurement targets, in which a collection apparatus 4 is schematically illustrated in a longitudinal cross-sectional view. In FIG. 1, the measurement system is configured with components other than the wheel 1 and the brake equipment 2 as the measurement targets, and includes the collection apparatus 4 and a particle measuring apparatus 11. The wheel 1 shown in FIG. 1 is a member to be in rolling contact with a rail. As shown in FIG. 2, the wheel 1 includes: a tread 1a to be in contact with a top surface of the rail, thereby receiving frictional resistance; a flange surface 1b sequentially formed in an outer periphery of the wheel 1 to prevent derailment; etc. The wheel 1 is a constituent member of a wheelset supporting a railway vehicle, and a real wheel used in a railway vehicle. The wheel 1 is a solid rolled wheel produced by rolling high carbon steel to integrate a tire and a wheel center with each other, a tired wheel produced by shrink-fitting a tire in a wheel center, or the like. Examples of the solid rolled wheel herein include: an AR (as rolled) wheel, which is not subjected to heat treatment; a SQ (slack quenched) wheel used for an electric railcar or a diesel railcar, which includes a fine pearlite structure in the vicinity of its surface, thereby hardly causing a thermal crack; an RQ (rim quenched) wheel used for an electric railcar or a Shinkansen (registered trademark) train, which includes a tempered martensite structure in the vicinity of its surface to enhance strength; and the like. Examples of the tired wheel include: a rolled wheel center made of high carbon steel material; a cast steel wheel made of cast steel material; and the like. The wheel 1 is attached to brake performance tester, which is capable of controlling brake pressing force, deceleration, torque, etc. under a wide range of conditions, from locomotives to commuter trains and a train equivalent to Shinkansen, and performing a test equivalent to actual running.

The brake equipment 2 shown in FIGs. 1 and 2 is equipment for applying a brake. The brake equipment 2 is foundation brake equipment, which allows pneumatic pressure or hydraulic pressure specified by a brake control apparatus to flow into a brake cylinder and mechanically operates to generate frictional force through a lever mechanism or the like. The brake equipment 2 is tread brake equipment that presses a brake shoe 3 against the tread 1a of the wheel 1 to generate frictional force as braking force. The brake equipment 2 shown in FIGs. 1 and 2 is, for example, a unit brake with respective components formed into a unit, that is, a brake unit with one-side tread block that presses the brake shoe 3 against the tread 1a of the wheel 1 from one side of the wheel 1. The brake equipment 2 is attached to the brake performance tester which evaluates performance of a tread brake, and is real brake equipment used in a railway vehicle. The brake equipment 2 includes the brake shoe 3.

The brake shoe 3 is a member that is pressed against the tread 1a of the wheel 1, thereby generating frictional force. As shown in FIG. 1, the brake shoe 3 is a brake frictional material (shoe) with arc-shaped appearance, and a back side of the brake shoe 3 is held by a brake shoe head (mount (shoe head)). The brake shoe 3 includes a friction surface (lining surface) 3a to be in frictional contact with the tread 1a. As indicated by solid lines in FIGs. 1 and 2, the brake shoe 3 advances to the tread 1a of the wheel 1 and is pressed against the tread 1a during braking application. As indicated by two-dot chain lines in FIGs. 1 and 2, the brake shoe 3 retreats from the tread 1a of the wheel 1 and is separated from the tread 1a during release of braking. Examples of the brake shoe 3 include: a composite brake shoe mainly formed from synthetic resin; a cast iron brake shoe using flake graphite cast iron mainly composed of flake graphite and pearlite; an alloy cast iron brake shoe based on a cast iron brake shoe with a certain amount or more of special elements such as phosphorus and chromium added; a phosphorous cast iron brake shoe, which is an alloy cast iron brake shoe with the increased amount of phosphorus ingredients; a sintered metal brake shoe produced by baking and pressing after adding powder of a plurality of metals such as iron and copper and power of graphite or the like; etc. The brake shoe 3 is a real brake shoe used in a railway vehicle, similarly to the wheel 1.

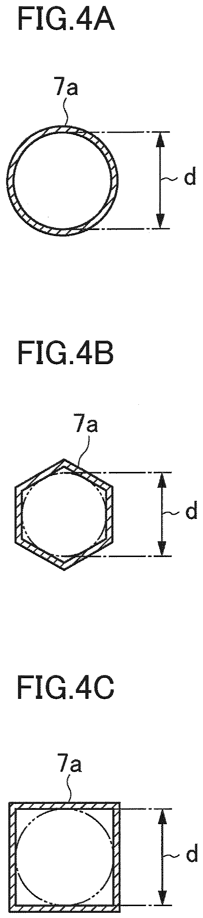

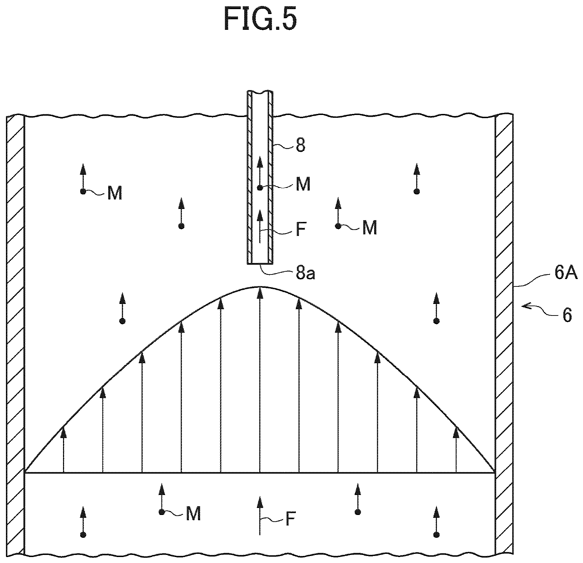

The collection apparatus 4 shown in FIG. 1 is an apparatus for collecting particulate material M generated by frictional contact. As shown in FIG. 2 and FIGs. 4A to 4C, the collection apparatus 4 forms an approximately uniform flow velocity distribution of a flow F containing the particulate material M generated by frictional contact between the wheel 1 and the brake shoe 3. As shown in FIG. 1, the collection apparatus 4 is a small vertical dust collector extending in an up-and-down direction so as to guide the flow F from below upward, and can easily be attached to or detached from existing equipment such as the brake performance tester. The collection apparatus 4 includes: a dust collecting section 5 shown in FIGs. 1 and 2; a suction duct section 6 shown in FIGs. 1 to 3 and 5; a rectifier section 7 shown in FIGs. 1 and 3; a collection section 8 shown in FIGs. 1 and 5; an exhaust section 9 shown in FIG. 1; and a support section 10. The collection apparatus 4 sucks air inside the suction duct section 6 into the collection section 8 and collects the particulate material M at the same velocity as a flow velocity of the air inside the suction duct section 6 while ensuring a suction flow rate of the air being sucked into the suction duct section 6. As shown in FIGs. 1 and 5, the collection apparatus 4 makes the flow velocity distribution of the flow F of the air inside the suction duct section 6 approximately uniform, thereby sucking the air in the collection section 8 at approximately the same flow velocity as the flow F of the air inside the suction duct section 6.

The particulate material M shown in FIGs. 1 and 5 is material generated by frictional contact. The particulate material M is generated by frictional contact between the wheel 1 and the brake shoe 3, mainly due to the brake shoe 3 wear. The particulate material M is fixed fine particles in a micrometer size, such as suspended particulate material, dust, and wear particles or wear debris. The suspended particulate material is, for example, material having a particle size of 10 $\mu$m or less, such as PM10 having a particle size of about 10 $\mu$m or less, PM2.5 (fine particulate material) having a particle size of about 2.5 $\mu$m or less, and ultrafine particles having a particle size of about 0.1 $\mu$m or less, among particles floating in the atmosphere. The dust is, for example, dusty solid particles as fine as powders floating in the air, such as a solid floating substance having a particle size of less than 75 $\mu$m.

The dust collecting section 5 shown in FIG. 1 is a section configured to collect heavy particulate material $M_2$ among the particulate material M. The dust collecting section 5 discharges air containing light particulate material $M_1$ among the particulate material M into the suction duct section 6. The light particulate material $M_1$ herein is, for example, the suspended particulate material or dust. The heavy particulate material $M_2$ is, for example, wear particles or wear debris. As shown in FIGs. 1 and 2, the dust collecting section 5 is a casing member with rectangular parallelepiped or cubic appearance. The dust collecting section 5 houses and thus covers a contact surface between the wheel 1 and the brake shoe 3, and peripheries of the brake shoe 3 and the brake shoe head holding the brake shoe 3. The dust collecting section 5 functions as a dust box that collects the relatively heavy particulate material $M_2$. Since the dust collecting section 5 forms a cavity (hollow space), the flow F of the air inside the dust collecting section 5 becomes a turbulent flow state due to rotating wind generated by rotation of the wheel 1. The turbulent flow state herein refers to a state where respective fluid elements are confused with each other and the air flows irregularly. The dust collecting section 5 includes a suction port 5a shown in FIGs. 1 and 2, and a discharge port 5b shown in FIG. 1.

The suction port 5a shown in FIGs. 1 and 2 is a section configured to suck air from outside to inside the dust collecting section 5. The suction port 5a opens at the side of the dust collecting section 5 such that a predetermined gap (for example, about 10 mm) $\Delta$ is formed between the suction port 5a and the wheel 1 to reduce influence of the rotating wind generated by the rotation of the wheel 1. The discharge port 5b shown in FIG. 1 discharges the flow F of the air containing the particulate material M. The discharge port 5b opens at an upper surface of the dust collecting section 5, as shown in FIGs. 1 and 2, so as to discharge the flow F of the air containing the particulate material M from the dust collecting section 5 toward the rectifier section 7. The dust collecting section 5 is detachably attached to the brake performance tester.

The suction duct section 6 shown in FIGs. 1 to 3 and 5 is a section configured to suck the air containing the particulate material M. The suction duct section 6 sucks the air containing the particulate material M in a direction of the rotating wind generated by the rotation of the wheel 1 being in frictional contact, and also sucks the air containing the particulate material M from below upward. The suction duct section 6 includes: a straight pipe section 6A extending in an up-and-down direction (vertical direction); and a curved pipe section (elbow) 6B that orients the flow F, which flows through the straight pipe section 6A in the up-and-down direction, at an angle of 90 degrees in a left-and-right direction (horizontal direction). In the suction duct section 6, a downstream end of the straight pipe section 6A is coupled to an upstream end of the curved pipe section 6B. The suction duct section 6 functions as an airduct to guide the air inside the dust collecting section 5 to the exhaust section 9. The suction duct section 6 is, as shown in FIGs. 2 and 3, a flow channel having a circular cross-sectional shape, which is a circular pipe path such as a transparent or translucent circular duct made of synthetic resin. As shown in FIG. 1, the suction duct section 6 includes an inflow port 6a and an outflow port 6b. The inflow port 6a is a section into which the air inside the dust collecting section 5 flows. The inflow port 6a is formed at a lower end of the suction duct section 6 and coupled to the discharge port 5b of the dust collecting section 5. The outflow port 6b is a section from which the air inside the suction duct section 6 flows out. The outflow port 6b is formed at an upper end of the suction duct section 6. The suction duct section 6 is formed to have a constant diameter from the inflow port 6a on the upstream side to the outflow port 6b on the downstream side.

The rectifier section 7 shown in FIGs. 1 and 3 is a section configured to rectify the flow F of the air inside the suction duct section 6 to a laminar flow state. The rectifier section 7 rectifies the flow F of the air inside the suction duct section 6 to the laminar flow state such that the collection section 8 collects, within the suction duct section 6, the air flowing inside the suction duct section 6 in the laminar flow state. The laminar flow state herein refers to a state where the respective fluid elements flow regularly in a constant line in a direction of the flow F as shown in FIGs. 1 and 5, and a streamline of the flow F is constantly parallel to a pipe axis. The rectifier section 7 allows the turbulent flow F of the air flowing into the suction duct section 6 to pass through, thereby regulating the turbulent flow F of the air to the flow F of the air in one direction. The rectifier section 7 generates the flow (Hagen-Poiseuille flow) F in the suction duct section 6, the flow F having a flow velocity distribution symmetric with respect to a center line of the straight pipe section 6A, where the flow velocity decreases as it approaches an inner wall of the suction duct section 6, becomes 0 at the inner wall of the suction duct section 6, and becomes the maximum flow velocity at the center of the suction duct section 6. In FIGs. 1 and 5, to conceptually show the flow velocity distribution of the air flow rectified to the laminar flow state, a plurality of arrows each having a length corresponding to the flow velocity are arranged in parallel, and a line connecting apexes of the respective arrows in a mountain shape is shown. The rectifier section 7 is disposed on the upstream side than the collection section 8 and close to the inflow port 6a of the suction duct section 6. The rectifier section 7 includes a rectifying lattice 7a shown in FIGs. 1, 3, and FIGs. 4A to 4C.

The rectifying lattice 7a shown in FIGs. 1, 3. and FIGs. 4A to 4C is a member configured to divide the inside of the suction duct section 6 into a plurality of sections to regulate the flow F of the air inside the suction duct section 6. In the rectifying lattice 7a, a plurality of thin tubes having predetermined length and inner diameter are disposed in a grid pattern without gaps in a radial direction inside the suction duct section 6. The rectifying lattice 7a is a circular tube having a circular cross-section as shown in FIGs. 3 and 4A, a honeycomb core which is a structure having a hexagonal cross-sectional shape similar to a honeycomb as shown in FIG. 4B, or a square tube (square pipe) having a quadrilateral cross-sectional shape as shown in FIG. 4C.

The collection section 8 shown in FIGs. 1 and 5 is a section configured to collect the air flowing inside the suction duct section 6. The collection section 8 collects, within the suction duct section 6, the air flowing inside the suction duct section 6 in the laminar flow state. The collection section 8 includes a collection port 8a to suck in and collect the air inside the suction duct section 6 on a tip of the collection section 8. The collection section 8 is a thin tubular probe (collection tube) inserted into the suction duct section 6. The collection section 8 penetrates through the curved pipe section 6B of the suction duct section 6, and guides the air containing the particulate material M sucked from the collection port 8a to a measurement section 11b of the particle measuring apparatus 11. The collection section 8 sucks the air from the suction duct section 6 and into the collection section 8 such that a flow velocity of air flowing inside the collection section 8 becomes the same as or slightly faster than the flow velocity of the air flowing inside the suction duct section 6. The part of the collection section 8 inserted into the suction duct section 6 is disposed in parallel to the inner wall of the suction duct section 6 such that the collection port 8a is positioned on the center line of the straight pipe section 6A of the suction duct section 6.

The exhaust section 9 shown in FIG. 1 is a section configured to discharge the air inside the suction duct section 6 to outside the suction duct section 6 for keeping the flow F of the air inside the suction duct section 6 in the laminar flow state. The exhaust section 9 sucks the air inside the suction duct section 6 and discharges the air from inside the suction duct section 6 without causing a swirl flow in the suction duct section 6. The exhaust section 9 includes: an inlet port 9a coupled to the outflow port 6b of the suction duct section 6, from which the air inside the suction duct section 6 is drawn in; a rotating cylindrical rotor 9b; a casing 9c rotatably covering the rotor 9b; an electric motor 9d that rotationally drives the rotor 9b; a plurality of blades 9e that are spaced apart from each other in a circumferential direction of an outer circumferential surface of the rotor 9b and project from the outer circumferential surface; and a blowout port 9f through which the air drawn in from the inlet port 9a is blown out. The exhaust section 9 is, for example, a multiblade fan such as a sirocco fan. As an exhauster for discharging the air inside the suction duct section 6, the exhaust section 9 uses a centrifugal fan, which draws in the air inside the suction duct section 6 through the inlet port 9a and blows out this air in a centrifugal direction from the blowout port 9f. To reduce emission of the particulate material M from between the wheel 1 and the suction port 5a of the dust collecting section 5, the exhaust section 9 sucks the inside of the dust collecting section 5 and the suction duct section 6 such that a pressure in the dust collecting section 5 becomes negative pressure, and discharges the air in a direction perpendicular to a rotation axis of the exhaust section 9.

The support section 10 is a section configured to support the exhaust section 9. The support section 10 is a metallic frame member such as an aluminum frame, and disposed in parallel to the suction duct section 6. The support section 10 supports the exhaust section 9 on an upper end of the support section 10, and a lower end of the support section 10 is detachably attached to the brake performance tester.

The particle measuring apparatus 11 is an apparatus for measuring the particulate material M flowing inside the suction duct section 6. The particle measuring apparatus 11 sucks the air containing the particulate material M flowing inside the suction duct section 6, and measures the particulate material M flowing inside the suction duct section 6. The particle measuring apparatus 11 measures, for example, a number concentration representing the number of the particulate material M in the air per unit volume, and a particle size distribution that is a histogram with a size of the particulate material M on a horizontal axis and a frequency on a vertical axis. The particle measuring apparatus 11 includes, inside thereof, a filter section that allows only the particulate material M within a range of a measurement target particle size to pass through. As shown in FIG. 1, the particle measuring apparatus 11 includes a coupling section 11a, a measurement section 11b, a filter section 11c, and a suction section 11d. The coupling section 11a is a section to which a rear end of the collection section 8 is coupled. The coupling section 11a introduces the air containing the particulate material M flowing inside the collection section 8 into the measurement section 11b. The measurement section 11b is a section configured to measure the number concentration and the particle size distribution of the particulate material M. The measurement section 11b measures, for example, suspended particulate material such as PM10 having a particle size of 10 $\mu$m or less, PM2.5, or ultrafine particles as a measurement target. The measurement section 11b measures the number concentration and the particle size distribution of the particulate material M by using, for example, a principle that an amount of scattered light caused by the particulate material M contained in the air sucked by the collection section 8 changes in proportion to the mass of the particulate material M. The filter section 11c is a section configured to remove the particulate material M. The filter section 11c removes the particulate material M from the air flowing in from the measurement section 11b, and discharges the air after the removal into the suction section 11d. The suction section 11d is a section configured to suck the air flowing inside the suction duct section 6 into the measurement section 11b through the collection section 8. The suction section 11d sucks the air from inside the suction duct section 6 and into the collection section 8 at a constant flow rate such that the flow velocity of the air flowing inside the collection section 8 becomes the same as or slightly faster than the flow velocity of the air flowing inside the suction duct section 6. The suction section 11d is a pump or the like to suck the air into the collection section 8 to sample a small amount of air from the air flowing inside the suction duct section 6 at a constant flow rate.

A flow velocity measuring apparatus 12 shown in FIG. 1 is an apparatus for measuring the flow velocity of the air flowing inside the suction duct section 6. The flow velocity measuring apparatus 12 includes a heating wire section (probe) 12a and a measurement section 12b. The heating wire section 12a is a section configured to receive the flow F of the air inside the suction duct section 6. The heating wire section 12a is a heated thin metallic wire and inserted into the straight pipe section 6A of the suction duct section 6. The measurement section 12b is a section configured to measure the flow velocity of the air flowing inside the suction duct section 6. The measurement section 12b measures the flow velocity of the air flowing inside the suction duct section 6 by using a phenomenon that the amount of heat transferred from the heating wire section 12a to the surrounding air depends on air velocity. The measurement section 12b measures the flow velocity based on the change in electrical resistivity that occurs when the flow F of the air is received by the heating wire section 12a and the temperature of the heating wire section 12a is changed.

Next, an optimal range of a dimension of each section of the collection apparatus for particulate material according to the first embodiment will be described.

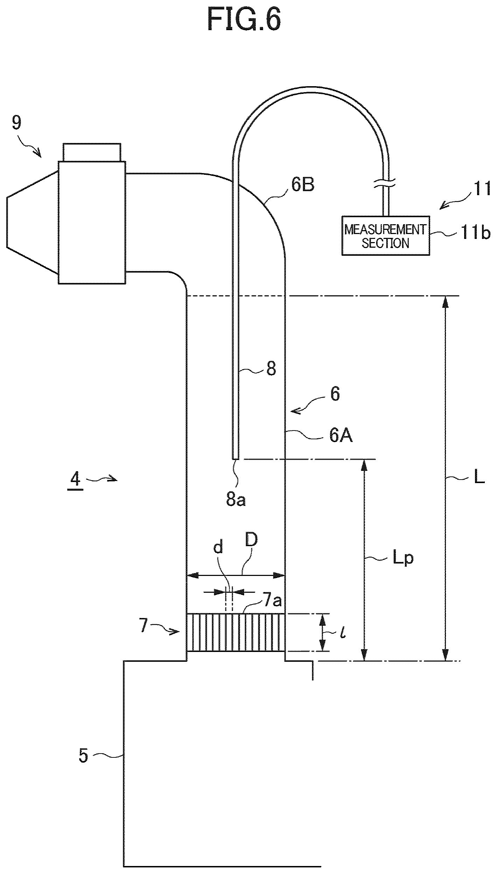

As shown in FIG. 6, provided that L represents a full length of the straight pipe section 6A of the suction duct section 6 and D represents an inner diameter of the suction duct section 6, a distance $L_P$ from the inflow port 6a of the suction duct section 6 to the collection port 8a of the collection section 8 is 0.4L to 0.8L, an inner diameter d of the rectifying lattice 7a of the rectifier section 7 is 0.02D to 0.10D, and a length 1 of the rectifying lattice 7a is 0.5D to 1.0D. Here, the inner diameter d of the rectifying lattice 7a is a diameter of an inscribed circle in contact with an inner surface of the honeycomb core shown in FIG. 4B or the quadrilateral shown in FIG. 4C.

Next, operations of the collection apparatus for particulate material according to the first embodiment will be described.

To stably measure the particulate material M by the particle measuring apparatus 11 shown in FIGs. 1 and 5, it is necessary to match the flow velocity of the air flowing inside the suction duct section 6 with the flow velocity of the air flowing inside the collection section 8, which is sucked into the collection section 8 from the suction duct section 6. For this purpose, it is necessary to make the flow velocity distribution of the air flowing inside the suction duct section 6 uniform, and cause the flow F of the air inside the suction duct section 6 to be in the laminar flow state. In the first embodiment, as shown in FIG. 1, in order not to cause a swirl flow in the flow F of the air inside the suction duct section 6, the air inside the suction duct section 6 is sucked by the exhaust section 9 and the flow F of the air flowing inside the suction duct section 6 is rectified by the rectifier section 7.

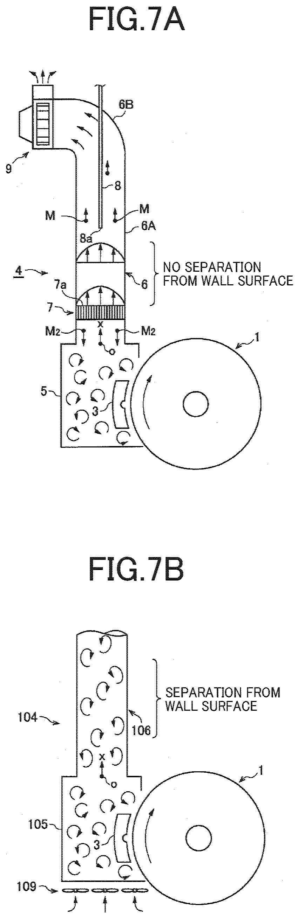

A collection apparatus 104 shown in FIG. 7B is different from the collection apparatus 4 shown in FIG. 7A. The collection apparatus 104 does not include the rectifier section 7, and sends air from the bottom of a dust collecting section 105 into the dust collecting section 105 and a fan duct section 106 by a fan section 109 different from the exhaust section 9. An origin O shown in FIGs. 7A and 7B is the center of the lower end of the suction duct section 6 or the fan duct section 106, and x is a position away from the origin O in an upward direction. A flow rate Q(x) [m³/s] in the position x is represented by the following Math. 1.

[Math. 1]

$$Q(x) = \frac{\pi \rho \left(\frac{D}{2}\right)^4}{8\mu} \cdot \frac{dP}{dx}$$

In Math. 1, $\rho$ represents an air density [kg/m$^3$], $\mu$ represents an air viscosity coefficient, D represents the inner diameter [mm] of the suction duct section 6 or the fan duct section 106, and dP/dx represents a pressure gradient indicating a rate of change in a pressure P between the origin O and the position x inside the suction duct section 6 or the fan duct section 106.

In the collection apparatus 104 shown in FIG. 7B, the flow F of the air inside the fan duct section 106 is in the turbulent flow state, and the pressure gradient inside the fan duct section 106 is dP/dx>0 (positive pressure gradient) as represented by Math. 1. As a result, separation and reverse flows occur on a wall surface boundary layer inside the fan duct section 106, leading to turbulent transition. Therefore, the flow velocity distribution in the fan duct section 106 is not uniform, and the flow velocity of the air flowing inside the fan duct section 106 fluctuates. On the other hand, in the collection apparatus 4 shown in FIG. 7A, in order not to cause a swirl flow in the suction duct section 6, the air inside the suction duct section 6 is sucked by the exhaust section 9 and also the air flowing inside the suction duct section 6 is rectified by the rectifier section 7. This results in the laminar flow state of the flow F of the air inside the suction duct section 6, which passes through the rectifier section 7, and the pressure gradient in the suction duct section 6 becomes dP/dx≤0 (negative pressure gradient) as represented by Math. 1, causing no separation or reverse flow on the wall surface boundary layer inside the suction duct section 6. As a result, the flow velocity of the air flowing inside the suction duct section 6 is approximately the same as the flow velocity of the air flowing inside the collection section 8, and the particle measuring apparatus 11 accurately measures the particulate material M neatly dispersed in the suction duct section 6.

Next, a collection method and a measurement method for particulate material according to the first embodiment will be described.

When the exhaust section 9 shown in FIG. 1 starts operating, the exhaust section 9 sucks the air inside the dust collecting section 5 and the air inside the suction duct section 6, so that the pressures inside the dust collecting section 5 and the suction duct section 6 become negative pressure. When the brake performance tester starts operating and the wheel 1 starts rotating, the rotational wind is generated by the rotation of the wheel 1 in a rotation direction of the wheel 1. As a result, air is drawn into the dust collecting section 5 from the gap Δ between the wheel 1 and the suction port 5a of the dust collecting section 5, and the air flows from the dust collecting section 5 toward the suction duct section 6.

When the brake equipment 2 starts braking operation based on a brake command output from the brake performance tester, a friction surface 3a of the brake shoe 3 adheres to the tread 1a of the wheel 1 as indicated by the solid lines in FIGs. 1 and 2. As a result, as shown in FIG. 1, braking force is applied to the wheel 1 by the frictional force acting on between the tread 1a and the friction surface 3a, generating the particulate material M due to frictional contact between the wheel 1 and the brake shoe 3. On this occasion, due to the negative pressure in the dust collecting section 5, the particulate material M is prevented from flowing out from the gap Δ between the wheel 1/the brake shoe 3 and the suction port 5a of the dust collecting section 5 to outside the dust collecting section 5.

Due to the rotating wind generated by the rotation of the wheel 1, the flow F inside the dust collecting section 5 becomes the turbulent flow state, so that the light particulate material $M_1$ and the heavy particulate material $M_2$ are violently mixed and disordered. Most of the heavy particulate material $M_2$ falls on the bottom of the dust collecting section 5, a part of the heavy particulate material $M_2$ flows together with the light particulate material $M_1$ from the discharge port 5b of the dust collecting section 5 into the suction duct section 6, but a part of the heavy particulate material $M_2$ flowed into the suction duct section 6 falls from the suction duct section 6 to the dust collecting section 5 by its own weight.

As shown in FIG. 1, since the exhaust section 9 is disposed on the downstream side of the suction duct section 6, the exhaust section 9 sucks air into the suction duct section 6 so as not to cause a swirl flow inside the suction duct section 6. Additionally, since the rectifier section 7 is disposed on the upstream side of the suction duct section 6, the flow F of the air flowing into the suction duct section 6 from the dust collecting section 5 is regulated. Accordingly, as shown in FIGs. 1 and 5, no separation of the flow F of the air from the wall surface occurs in the suction duct section 6, the flow velocity distribution of the flow F of the air inside the suction duct section 6 is approximately uniform, and the flow F of the air inside the suction duct section 6 on the downstream side of the rectifier section 7 becomes the laminar flow state. The exhaust section 9 sucks the air including the particulate material M neatly dispersed in the suction duct section 6 at a predetermined suction flow rate such that the flow velocity of the air flowing inside the suction duct section 6, which is sucked by the collection section 8, approximately matches with the flow velocity of the air flowing inside the collection section 8.

As a result, at approximately the same flow velocity as the flow velocity of the air flowing inside the suction duct section 6, the particulate material M passed through the rectifier section 7 is sucked into the measurement section 11b of the particle measuring apparatus 11 through the collection section 8, and the measurement section 11b measures the number concentration and the particle size distribution of the particulate material M. Since the exhaust section 9 sucks the air inside the suction duct section 6 so as not to cause a swirl flow in the suction duct section 6, the flow F inside the suction duct section 6 is kept in the laminar flow state, and the exhaust section 9 discharges the air inside the suction duct section 6 to outside the suction duct section 6.

According to the first embodiment, operations and effects as described below can be obtained.

(1) In the first embodiment, the suction duct section 6 sucks the air containing the particulate material M; the rectifier section 7 rectifies the flow F of the air inside the suction duct section 6 to the laminar flow state; the exhaust section 9 discharges the air sucked into the suction duct section 6 to outside the suction duct section 6 so as to keep the laminar flow state of the flow F of the air inside the suction duct section 6; and the collection section 8 collects, within the suction duct section 6, the air flowing inside the suction duct section 6 in the laminar flow state. Accordingly, the flow velocity distribution of the flow F of the air around the collection port 8a of the collection section 8 is approximately uniform in the suction duct section 6, thereby enabling reduction of the flow velocity fluctuation of the flow F of the air inside the suction duct section 6 and stabilization of the flow velocity distribution of the flow F of the air inside the suction duct section 6. As a result, it is possible to approximately match the flow velocity of the air flowing inside the suction duct section 6 with the flow velocity of the air flowing inside the collection section 8, and thus stably collect the air containing the particulate material M from the collection section 8 at a constant speed. Additionally, by sucking air from the dust collecting section 5 to the suction duct section 6 by the exhaust section 9 without causing a swirl flow, it is also possible to suck the air in an inner wall surface portion of the suction duct section 6. As a result, fluctuation of the flow velocity of the air flowing inside the suction duct section 6 is reduced, thereby enabling stabilization of the flow velocity of the air flowing inside the suction duct section 6 to obtain the approximately uniform flow velocity distribution in the suction duct section 6. For example, by using a centrifugal fan such as a sirocco fan as the exhaust section 9 to draw air from the dust collecting section 5 to the straight pipe section 6A of the suction duct section 6, it is possible to easily reduce the fluctuation of the flow velocity of the air flowing inside the suction duct section 6 and stabilize the flow velocity.
(2) In the first embodiment, the heavy particulate material $M_2$ among the particulate material M generated by frictional contact is dropped and collected by the dust collecting section 5, and air containing the light particulate material $M_1$ among the particulate material M generated by frictional contact is discharged into the suction duct section 6. Accordingly, it is possible to drop the heavy particulate material $M_2$ by its own weight and collect the same by the dust collecting section 5, and rectify the flow F of the air containing the light particulate material $M_1$ by the rectifier section 7 and collect the particulate material M neatly dispersed in the suction duct section 6 by the collection section 8.
(3) In the first embodiment, in the direction of the rotating wind generated by the movement of the wheel 1 being in frictional contact, the suction duct section 6 sucks the air containing the particulate material M. For example, in a case of measuring particulate material generated by frictional contact between a tire of an automobile and a road surface, a flow containing the particulate material is guided from inside a cover covering the tire and the road surface in a lateral direction toward a measuring apparatus. Therefore, a problem is that a direction of tangential force acting on a contact surface between the tire and the road surface is perpendicular to the flow direction, and the relatively large particulate material dropped on a bottom within the cover is blown up by rotating wind generated by rotation of the tire. In the first embodiment, the flow generated by the rotation of the wheel 1 is in a tangential direction of a contact point between the wheel 1 and brake shoe 3, and most of the particulate material M generated by frictional contact is discharged in the tangential direction of the contact point. Accordingly, it is possible to suck the air into the suction duct section 6 such that the direction of the rotating wind generated by the rotation of the wheel 1 is matched with the direction of the flow F inside the suction duct section 6, thereby rectifying the flow F by the rectifier section 7. It is also possible to prevent the rotating wind from blowing toward the bottom of the dust collecting section 5, and thus prevent the heavy particulate material $M_2$ dropped on the bottom of the dust collecting section 5 from blowing up.
(4) In the first embodiment, the suction duct section 6 sucks the air containing the particulate material M from below upward. Accordingly, it is possible to let the heavy particulate material $M_2$ such as relatively large wear particles and wear debris, which are not fine particles, fall by gravity, and collect the same by the dust collecting section 5. Additionally, it is possible to configure a vertical apparatus extending in a vertical direction, not a lateral apparatus extending in a horizontal direction as in Conventional Arts 1 to 3, thereby achieving improved portability and easy installation. Furthermore, there is no need to let the light particulate material $M_1$ through the air filter to remove the heavy particulate material $M_2$. Accordingly, it is possible to separate the light particulate material $M_1$ from the heavy particulate material $M_2$ by using a simple structure, and also prevent the flow velocity of the air flowing inside the suction duct section 6 from decreasing due to the air filter.

(Second Embodiment)

Hereinafter, the same parts as those shown in FIGs. 1 to 7 are denoted by the same reference numerals, and detailed description thereof will be omitted.

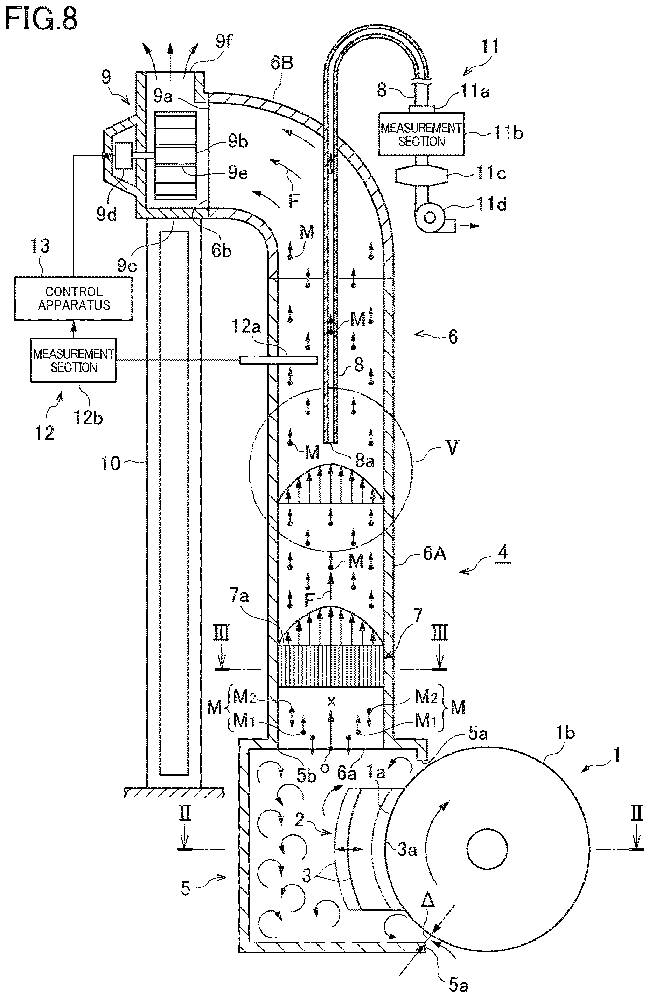

A control apparatus 13 shown in FIG. 8 is an apparatus for controlling the operation of the exhaust section 9 of the collection apparatus 4 based on measurement results obtained by the flow velocity measuring apparatus 12. The control apparatus 13 controls rotation of the electric motor 9d of the exhaust section 9 based on an output signal (flow velocity signal) output from the measurement section 12b of the flow velocity measuring apparatus 12 such that the flow velocity of the air flowing inside the suction duct section 6 becomes a predetermined flow velocity. For example, the control apparatus 13 adjusts rotational speed of the electric motor 9d to control the flow rate of the air sucked into the suction duct section 6 such that the flow velocity of the air flowing inside the suction duct section 6 becomes approximately the same as the flow velocity of the air flowing inside the collection section 8.

The collection apparatus for particulate material according to the second embodiment has the following effects in addition to the effects of the first embodiment.

In the second embodiment, based on the measurement results obtained by the flow velocity measuring apparatus 12, the control apparatus 13 controls the operation of the exhaust section 9. Accordingly, for example, it is possible to perform feedback control of the operation of the exhaust section 9 based on the measurement results of the flow velocity of the air flowing inside the suction duct section 6, and reduce fluctuation of the flow velocity of the air flowing through the suction duct section 6. As a result, the flow velocity distribution of the flow F of the air around the collection port 8a of the collection section 8 can be made approximately uniform, thereby stabilizing the flow velocity distribution of the flow F of the air inside the suction duct section 6.

EXAMPLES

Next, specific examples will be described.

The collection apparatus 4 shown in FIG. 6 was attached to the brake performance tester available from Railway Technical Research Institute, and the flow velocity of the air inside the suction duct section 6 was measured when the air inside the suction duct section 6 was discharged by the exhaust section 9, by the flow velocity measuring apparatus 12 shown in FIG. 1. In addition, as shown in FIGs. 1 and 2, the particulate material M generated when the brake shoe 3 was pressed against the wheel 1 was measured by the particle measuring apparatus 11. As the wheel 1 shown in FIGs. 1 and 2, a wheel for a conventional line was used. As the brake shoe 3, a real composite brake shoe was used. The rectifier section 7 in FIGs. 1, 5, and 6 is a rectifier formed by bundling a plurality of commercially available straws having a circular cross-sectional shape as shown in FIG. 4A, and stuffing the straws into the suction duct section 6. The exhaust section 9 shown in FIG. 1 is an industrial fan, and the measurement was performed with an air volume of 2.4 [m$^3$/min].

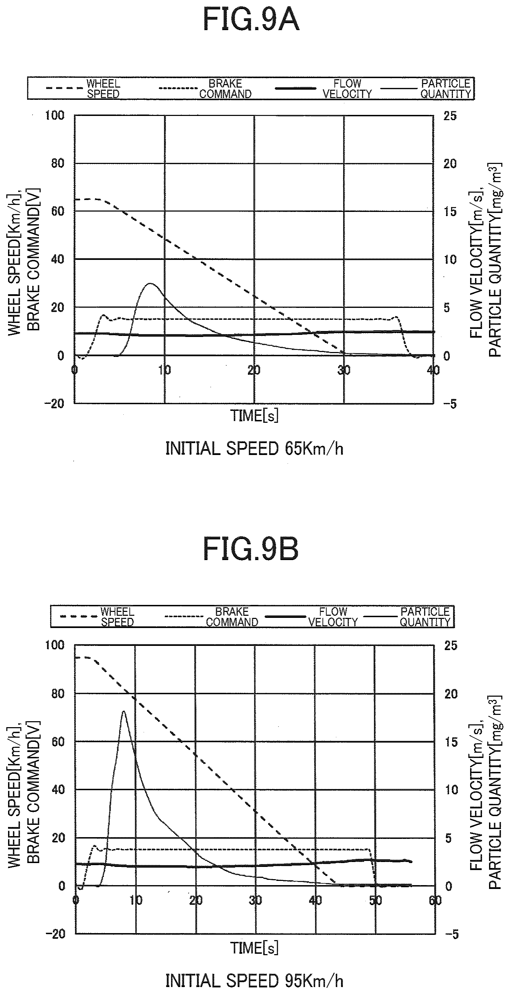

Graphs shown in FIGs. 9A and 9B show the measurement results obtained by the particle measuring apparatus 11 shown in FIG. 6. FIG. 9A shows the measurement results when an initial speed of the wheel was 65 [km/h], and FIG. 9B shows the measurement results when the initial speed of the wheel was 95 [km/h]. As shown in FIGs. 1 and 2, the quantity of particles [mg/m$^3$] generated when the brake shoe 3 was pressed against the wheel 1 with pressing force of 10 [kN] after receiving the brake command was measured by the particle measuring apparatus 11. As a result, as shown in FIGs. 9A and 9B, the flow velocity of the air flowing inside the suction duct section 6 was approximately constant, and the flow velocity distribution in the suction duct section 6 was also approximately constant. Thus, it was confirmed that the flow F of the air inside the suction duct section 6 can be rectified to the laminar flow state by the rectifier section 7.

Additionally, it was confirmed that a ratio of kinetic energy at the initial speed of 95 [km/h] to the kinetic energy at the initial speed of 60 [km/h] was about 2.1 times, and when the particle quantity of 18.0 [mg/m$^3$] measured at the initial speed of 95 [km/h] was compared with the particle quantity of 7.5 [mg/m$^3$] measured at the initial speed of 60 [km/h], a ratio of particle numbers was about 2.4 times, approximately the same as the kinetic energy. Accordingly, it was confirmed that as the rotational speed of the wheel 1 became high and the kinetic energy increased, the particle quantity also increased; and thus, it was possible to accurately measure the particle quantity even when the influence of the rotating wind generated by the rotation of the wheel 1 or the turbulent flow inside the dust collecting section 5 became stronger.

Note that the dimensions of the respective sections of the collection apparatus 4 used for the measurement include the full-length L of 900 [mm], the inner diameter D of 150 [mm], the distance L$_P$ of 450 [mm]=0.5L, the inner diameter d of 6 [mm]=0.04D, and the length 1 of 80 [mm]=0.53D. Thus, it was confirmed that the dimensions of the respective sections of the collection device 4 were within the optimal numerical ranges. Additionally, a theoretical value of the flow velocity of the air flowing inside the suction duct section 6 was 2.26 [m/s] when the flow velocity of the sirocco fan was 2.4 [m$^3$/min], and the measurement values of the flow velocity shown in FIGs. 9A and 9B were approximately the same as the theoretical value.

The present invention should not be construed as being limited to the above-described embodiments. Various variations and modifications can be made as described below, and these variations and modifications also fall within the scope of the present invention.

(1) In the above-described embodiments, the brake equipment 2 of a railway vehicle is described as an example, but the present invention is also applicable to brake equipment of other transportation means such as automobiles, motorcycles, and bicycles. Moreover, in the above-described embodiments, the case where the brake equipment 2 is tread brake equipment is described as an example, but the present invention is also applicable to: disk brake equipment, which presses a frictional material against a disk rotating integrally with an axel to generate frictional force as braking force; rail brake equipment, which directly presses a frictional material against a top surface of a rail to generate frictional force as braking force; etc. Furthermore, in the above-described embodiments, the case where the collection apparatus 4 is installed on the brake performance tester is described as an example, but the present invention is also applicable to a case where the collection apparatus 4 is installed on a truck of a railway vehicle running on a railway track.

(2) In the above-described embodiments, the case where suspended particulate material such as PM 10 having a particle size of 10 $\mu$m or less, PM2.5, and ultrafine particles is measured by the particle measuring apparatus 11 is described as an example, but the present invention is also applicable to a case where dust, wear particles or wear debris, etc. are measured by the particle measuring apparatus 11. Moreover, in the above-described embodiments, the case where particulate material M generated upon frictional contact between the wheel 1 and the brake shoe 3 is measured is described as an example, but the members to be in frictional contact are not limited to the wheel 1 and the brake shoe 3. For example, the present invention is also applicable to a case where particulate material generated by the following frictional contact is measured: that is, frictional contact between a frictional material on a driving side and a frictional material on a driven side of a clutch apparatus which transmits power from the driving side to the driven side; frictional contact between a ground brush, which dissipates electric power from a rotor, and this rotor; frictional contact between a workpiece and tools; frictional contact between a contact wire and a contact strip; frictional contact between a wheel and a rail, etc. Furthermore, in the above-described embodiments, the case where one of a plurality of members being in frictional contact rotates while the other member is stopped is described as an example, but the present invention is also applicable to a case where both members being in frictional contact rotate.

(3) In the above-described embodiments, the case where the members are in frictional contact with each other while one member is in a rotary motion and the other member is stopped is described as an example, but the present invention is also applicable to a case where both members are in frictional contact while moving linearly, or a case where the members are in frictional contact while one member is in a rotary motion and the other member moves linearly. Furthermore, in the above-described embodiments, the described example is the case where the rectifying lattice 7a has the circular, quadrilateral, or hexagonal cross-sectional shape, but the present invention is also applicable to a case where the rectifying lattice 7a has an oval, triangle, or polygon shape.

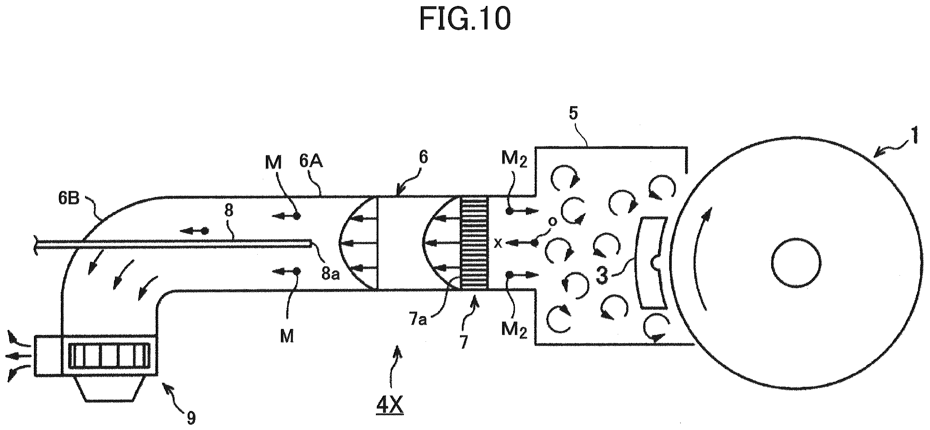

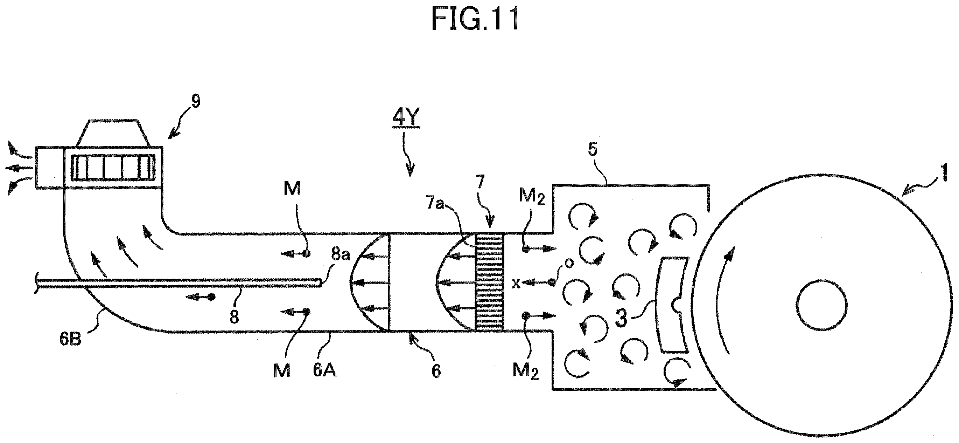

(4) In the above-described embodiments, the case where the air is sucked by the suction duct section 6 in the vertical direction (height direction) is described as an example, but the present invention is also applicable to a case where the air is sucked in the horizontal direction (lateral direction) by the suction duct section 6. For example, a configuration of a collection apparatus 4X as shown in FIG. 10 or a collection apparatus 4Y as shown in FIG. 11 may be implemented. Though not shown in FIGs. 10 and 11, the particle measuring apparatus 11 is coupled to the rear end of the collection section 8, similarly to the above-described embodiments. Thereby, a measurement system including the collection apparatus 4X or the collection apparatus 4Y is configured. Moreover, a curving direction of the curved pipe section 6B is illustrated as an upward direction in FIG. 10 and a downward direction in FIG. 11, but it may be the horizontal direction (direction toward the front or back of FIG. 10). Furthermore, in the above-described embodiments, the case where a centrifugal fan, such as a sirocco fan, is used as the exhaust section 9 is described as an example, but the present invention is also applicable to a case where a turbo fan, which is a centrifugal fan similar to a sirocco fan, is used as the exhaust section 9.

[Outline]

The contents disclosed in the present description can be summarized as follows.

(First Aspect of Present Invention)

A collection apparatus for particulate material that collects particulate material generated by frictional contact, including:

a suction duct section that sucks air containing the particulate material;
a rectifier section that rectifies a flow of air inside the suction duct section to a laminar flow state;
an exhaust section that discharges the air sucked into the suction duct section to outside the suction duct section; and

a collection section that collects, within the suction duct section, air flowing inside the suction duct section.

(Second Aspect of Present Invention)

The collection apparatus according to the first aspect of the present invention, further including a dust collecting section that drops and collects heavy particulate material among the particulate material, wherein
the dust collecting section discharges air containing light particulate material among the particulate material to the suction duct section.

(Third Aspect of Present Invention)

The collection apparatus according to the first or second aspect of the present invention, wherein the suction duct section sucks the air containing the particulate material in a direction of wind generated by movement of a member being in frictional contact.

(Fourth Aspect of Present Invention)

The collection apparatus according to any of the first to third aspects of the present invention, wherein the suction duct section sucks the air containing the particulate material from below upward.

(Fifth Aspect of Present Invention)

The collection apparatus according to any of the first to third aspects of the present invention, wherein the suction duct section sucks the air containing the particulate material in a horizontal direction.

(Sixth Aspect of Present Invention)

The collection apparatus according to any of the first to fifth aspects of the present invention, wherein, provided that L represents a full length of a straight pipe section of the suction duct section and D represents an inner diameter of the suction duct section,

a distance from an inflow port of the suction duct section to a collection port of the collection section is 0.4L to 0.8L,
an inner diameter of a rectifying lattice of the rectifier section is 0.02D to 0.10D, and
a length of the rectifying lattice is 0.5D to 1.0D.

(Seventh Aspect of Present Invention)

A measurement system including the collection apparatus according to any of the first to sixth aspects of the present invention, for measuring the particulate material collected by the collection apparatus.

(Eighth Aspect of Present Invention)

A collection method for particulate material generated by frictional contact, including:

rectifying a flow of air inside a suction duct section such that the flow of air inside the suction duct section becomes a laminar flow state, the suction duct section sucking air containing the particulate material;
discharging the air sucked into the suction duct section to outside the suction duct section; and
collecting, within the suction duct section, the flow of the air flowing inside the suction duct section.

(Ninth Aspect of Present Invention)

A measurement method including the collection method according to the eighth aspect of the present invention, for measuring the particulate material collected by the collection method.

REFERENCE SIGNS LIST

1: wheel
1a: tread
2: brake equipment
3: brake shoe
3a: friction surface
4: collection apparatus
5: dust collecting section
6: suction duct section
6A: straight pipe section
6B: curved pipe section
7: rectifier section
7a: rectifying lattice
8: collection section
8a: collection port
9: exhaust section
10: support section
11: particle measuring apparatus
12: flow velocity measuring apparatus
M: particulate material
$M_1$: light particulate material
$M_2$: heavy particulate material
F: flow
Δ: gap

## Claims

1. A collection apparatus for particulate material that collects particulate material generated by frictional contact, comprising:

   a suction duct section that sucks air containing the particulate material;
   a rectifier section that rectifies a flow of air inside the suction duct section to a laminar flow state;
   an exhaust section that discharges the air sucked into the suction duct section to outside the suction duct section; and
   a collection section that collects, within the suction duct section, air flowing inside the suction duct section.

2. The collection apparatus according to claim 1, further comprising a dust collecting section that drops and collects heavy particulate material among the particulate material, wherein
   the dust collecting section discharges air containing light particulate material among the particulate material to the suction duct section.

3. The collection apparatus according to claim 1 or 2, wherein the suction duct section sucks the air containing the particulate material in a direction of wind generated by movement of a member being in frictional contact.

4. The collection apparatus according to any one of claims 1 to 3, wherein the suction duct section sucks the air containing the particulate material from below upward.

5. The collection apparatus according to any one of claims 1 to 3, wherein the suction duct section sucks the air containing the particulate material in a horizontal direction.

6. The collection apparatus according to any one of claims 1 to 5, wherein, provided that L represents a full length of a straight pipe section of the suction duct section and D represents an inner diameter of the suction duct section,

   a distance from an inflow port of the suction duct section to a collection port of the collection section is 0.4L to 0.8L,
   an inner diameter of a rectifying lattice of the rectifier section is 0.02D to 0.10D, and
   a length of the rectifying lattice is 0.5D to 1.0D.

7. A measurement system comprising the collection apparatus according to any one of claims 1 to 6, for measuring the particulate material collected by the collection apparatus.

8. A collection method for particulate material generated by frictional contact, comprising:

rectifying a flow of air inside a suction duct section such that the flow of air inside the suction duct section becomes a laminar flow state, the suction duct section sucking air containing the particulate material;
discharging the air sucked into the suction duct section to outside the suction duct section; and
collecting, within the suction duct section, the flow of the air flowing inside the suction duct section.

9. A measurement method comprising the collection method according to claim 8, for measuring the particulate material collected by the collection method.

# FIG.1

# FIG.2

# FIG.3

# FIG.4A

# FIG.4B

# FIG.4C

# FIG.5

# FIG.6

# FIG.7A

NO SEPARATION
FROM WALL SURFACE

# FIG.7B

SEPARATION FROM
WALL SURFACE

# FIG.8

# FIG.9A

INITIAL SPEED 65Km/h

# FIG.9B

INITIAL SPEED 95Km/h

# FIG.10

EP 4 733 736 A1

# FIG.11

EP 4 733 736 A1

# EP 4 733 736 A1

## INTERNATIONAL SEARCH REPORT

International application No.

**PCT/JP2023/039978**

### A. CLASSIFICATION OF SUBJECT MATTER

*G01N 1/02*(2006.01)i

FI: G01N1/02 Q; G01N1/02 H

According to International Patent Classification (IPC) or to both national classification and IPC

### B. FIELDS SEARCHED

Minimum documentation searched (classification system followed by classification symbols)

G01N1/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2022/130853 A1 (HORIBA, LTD.) 23 June 2022 (2022-06-23) paragraphs [0028]-[0036], fig. 1 | 1, 3-9 |
| A | | 2 |
| Y | CD-ROM of the specification and drawings annexed to the request of Japanese Utility Model Application No. 023886/1992 (Laid-open No. 077751/1993) (HORIBA LTD.) 22 October 1993 (1993-10-22), paragraph [0009] | 1, 3-9 |
| Y | HAGINO Hiroyuki et al., Laboratory testing of airborne brake wear particle emissions using a dynamometer system under urban city driving cycles, Atmospheric Environment, 2016, vol. 131, pp. 269-278 fig. 1 | 5 |
| A | WO 2020/071510 A1 (AKEBONO BRAKE INDUSTRY CO., LTD.) 09 April 2020 (2020-04-09) paragraphs [0043]-[0052], fig. 4 | 1-9 |

☐ Further documents are listed in the continuation of Box C.     ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **28 December 2023** | **16 January 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/039978**

| Patent document cited in search report | | | Publication date (day/month/year) | Patent family member(s) | | | Publication date (day/month/year) |
|---|---|---|---|---|---|---|---|
| WO | 2022/130853 | A1 | 23 June 2022 | CN | 116648569 | A | |
| | | | | DE | 112021006433 | T5 | |
| JP | 05-077751 | U1 | 22 October 1993 | US column 5, lines 16-26 | 5543113 | A | |
| | | | | DE | 4308191 | A1 | |
| WO | 2020/071510 | A1 | 09 April 2020 | EP paragraphs [0037]-[0046], fig. 4 | 3862744 | A1 | |
| | | | | JP | 2020-60386 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020520448 W

**Non-patent literature cited in the description**

- **HIROYUKI HAGINO** ; **MOTOAKI OYAMA** ; **SOU-SUKE SASAKI**. Laboratory testing of airborne brake wear particle emissions using a dynamometer system under urban city driving cycles. *Atmospheric Environment*, 2016, vol. 131, 269-278

- **MARCEL MATHISSEN** ; **THEODOROS GRIGOR-ATOS** ; **TERO LAHDE** ; **RAINER VOGT**. Brake Wear Particle Emissions of a Passenger Car Measured on a Chassis Dynamometer. *Atmosphere*, 2019, vol. 10, 556